# EUROPÄISCHE PATENTANMELDUNG

(11) **EP 1 887 458 A1**
(43) Veröffentlichungstag der Anmeldung: **13.02.2008**
(21) Anmeldenummer: 07015352.3
(22) Anmeldetag: 06.08.2007
(51) Int. Cl.: G06F 7/58

(54) **Pseudo-Zufallszahlengenerator für eine Chipkarte**

(30) Priorität: 08.08.2006 DE 102006037016
(71) Anmelder: Giesecke & Devrient GmbH, 81677 München (DE)
(72) Erfinder: Hockauf, Manfred, 85567 Grafing (DE); Seysen, Martin, Dr., 80809 München (DE)

(57) **Zusammenfassung**

Die vorliegende Erfindung betrifft ein Verfahren zum Erzeugen von Pseudo-Zufallszahlen (ZZ), ein Pseudo-Zufallszahlengenerator-Modul, einen mobilen Datenträger mit einem Pseudo-Zufallszahlengenerator-Modul und ein Computerprogrammprodukt. Erfindungsgemäß werden zwei hintereinander geschaltete Pseudo-Zufallszahlengeneratoren (ZZG₁, ZZG₂) verwendet, wobei der erste Zustand (Z₁) in einen EEPROM-Speicher des mobilen Datenträgers gespeichert wird und wobei der zweite Pseudo-Zufallszahlengenerator (ZZG₂) ausschließlich dazu verwendet wird, Pseudo-Zufallszahlen (ZZ) für das Betriebssystem (BS) zu erzeugen. Dabei wird der Startwert (SW₂) des zweiten Pseudo-Zufallszahlengenerators (ZZG₂) von zumindest einer Pseudo-Zufallszahl (ZZ) gebildet, die vom ersten Pseudo-Zufallszahlengenerator (ZZG₁) generiert worden ist, wobei nach einer Unterbrechung einer Spannungsversorgung des mobilen Datenträgers der Startwert (SW₂) des zweiten Pseudo-Zufallszahlengenerators (ZZG₂) mit Pseudo-Zufallszahlen (ZZ) des ersten Pseudo-Zufallszahlengenerator (ZZG₁) initialisiert wird.

## Beschreibung

Die Erfindung betrifft ein Verfahren zum Erzeugen von Pseudo-Zufallszahlen, ein Pseudo-Zufallszahlengenerator-Modul, einen mobilen Datenträger, insbesondere eine Chipkarte, mit einem solchen Pseudo-Zufallszahlengenerator-Modul und ein entsprechendes Computerprogrammprodukt.

Das Erzeugen von Zufallszahlen bzw. das Bereitstellen von entsprechenden Generatoren ist grundsätzlich für sicherheits-relevante Funktionen wesentlich. Auf dem Gebiet der Chipkartentechnik betrifft dies insbesondere kryptographische Verfahren, Padding-Verfahren, Authentisierungsverfahren, Verschlüsselungsverfahren oder sonstige Schutzverfahren: Wesentliche Kriterien, die bei der Beurteilung der Güte der erzeugten Zufallszahlen Verwendung finden, sind darin zu sehen, daß die Zufallszahlen von außen nicht manipulierbar und nicht vorhersagbar sind.

Man unterscheidet grundsätzlich zwischen nicht-deterministischen und deterministischen Zufallsgeneratoren. Ein nicht-deterministischer Zufallsgenerator zeichnet sich dadurch aus, daß er selbst dann unterschiedliche Zufallszahlen liefert, wenn dieselben Ausgangsbedingungen erfüllt sind. Zu den nicht-deterministischen Zufallsgeneratoren zählen physikalische Zufallsgeneratoren (bei denen ein Input des Zufallsgenerators z.B. auf einer Zahl von radioaktiven Zerfällen in einer bestimmten Zeitspanne basiert, die von einem Geigerzähler erfasst werden), quasi-zufällige Zufallsgeneratoren, bei denen beispielsweise der Input auf einer Systemzeit des Prozessors oder Computers beruht, in der eine bestimmte Benutzeraktion ausgeführt wird. Darüber hinaus sind Hybrid-Generatoren bekannt, die als Input einige echte Zufallszahlen verwenden. In der Regel basieren die heutigen Zufallszahlengeneratoren der Chipkarten-Mikrocontroller auf spannungsgesteuerten Oszillatoren und daran angehängten linear rückgekoppelten Schieberegistern.

Als zweiter grundlegender Ansatz sind neben den nicht-deterministischen Zufallsgeneratoren die deterministischen Zufallsgeneratoren bekannt, bei denen bei gleichen Ausgangsbedingungen immer dieselbe Folge von Zufallszahlen erzeugt wird. Da die mit einem deterministischen Zufallsgenerator erzeugten Zufallszahlen nicht vollständig zufällig sind, werden sie auch als Pseudo-Zufallszahlengeneratoren bezeichnet. Bei den deterministischen Zufallsgeneratoren sind sowohl softwaretechnische als auch hardware-technische Realisierungen bekannt. Als Beispiele für software-technische Realisierungen sind arithmetische Zufallszahlengeneratoren zu nennen und rekursive arithmetische Zufallszahlengeneratoren, bei denen die Berechnung der jeweiligen Pseudo-Zufallszahl auf zumindest einer der vorhergehend berechneten Pseudo-Zufallszahlen beruht. Bei dem rekursiven Ansatz wird also der Output des Pseudo-Zufallszahlengenerators wieder rückgekoppelt und dem Zufallsgenerator als Input zugeführt. Bei einem allerersten Aufruf eines rekursiven Pseudo-Zufallszahlengenerators muss ein willkürlich gewählter Startwert bereitgestellt werden.

Die Erfindung betrifft den deterministischen Ansatz, der auf Pseudo-Zufallszahlengeneratoren basiert.

Werden Pseudo-Zufallszahlengeneratoren für Chipkarten verwendet, so beinhalten die heute auf den Markt befindlichen Chipkartenbetriebssyteme in der Regel Implementierungen von Pseudo-Zufallszahlengeneratoren nach unterschiedlichen Standards, beispielsweise nach dem ANSI X9.17-Protokoll auf dem Gebiet des Finanzwesens oder vergleichbaren Protokollen auf anderen Gebieten. Um die notwendige Sicherheit beim Betrieb von Chipkarten sicherstellen zu können ist es notwendig, daß die erzeugten Zufallszahlen nicht vorhersagbar wiederholt werden können. Es muss also sichergestellt werden, daß der Input für den jeweiligen Zufallszahlengenerator nicht konstant bleibt. Diese Bedingung muss auch dann erfüllt sein, wenn der Betrieb der Chipkarte z.B. durch einen RESET unterbrochen wird.

Um die Qualität der erzeugten Zufallszahlen zu erhöhen sind im Stand der Technik einige Verfahren vorgeschlagen worden. In diesem Zusammenhang offenbaren die US 6,714,955 und die US 6,253,223 Verfahren und entsprechende Vorrichtungen zur Erzeugung von Zufallszahlen, in denen ein physikalischer Zufallszahlengenerator und ein digitaler Pseudo-Zufallszahlengenerator miteinander kombiniert werden, um qualitativ höherwertige Zufallszahlen zu erzeugen.

Die JP 3237483 offenbart ein Verfahren zum Erzeugen von Pseudozufallszahlen auf einer Chipkarte unter Verwendung von zwei unterschiedlichen Schlüsseln und unter Zugriff auf einen reversiblen Algorithmus.

Bei allen vorstehend erwähnten, bekannten Verfahren war es vorgesehen, daß ein Zustand eines Pseudo-Zufallszahlengenerators in einem nicht flüchtigen Speicher des mobilen Datenträgers gespeichert wird, der auch nach einem RESET der Chipkarte als Input für den Pseudo-Zufallszahlengenerators zur Verfügung steht. Als nachteilig erweist es sich bei diesen Verfahren, daß bei jedem Erzeugen einer Zufallszahlenfolge bzw. eines Blocks von Zufallszahlen in den nicht flüchtigen Speicher der Chipkarte geschrieben werden muss. Da der Zugriff auf den EEPROM eine zeitintensive Operation ist, wirkt sich dies nachteilig auf die Performance aus. Darüberhinaus werden bestimmte Speicherzellen stark belastet, was insgesamt die Lebensdauer der Chipkarte negativ beeinflusst.

Um die Anzahl der Schreibzugriffe auf das EEPROM zu reduzieren, ist es im Stand der Technik bekannt Zähler zu verwenden, die jeweils nach einem Durchlauf durch den Pseudo-Zufallszahlengenerator (und damit nach einer Ausgabe von Zufallszahlen) inkrementiert werden. Nach einem RESET der Chipkarte wird lediglich der Zähler inkrementiert, der auf den EEPROM bezogen ist. Mit anderen Worten wird der Zähler aufgeteilt in einen Anteil für den flüchtigen und in einen Anteil für den nicht-flüchtigen Speicher. Bei Betrieb der Chipkarte wird also nur einmal der im EEPROM abgelegte Zähleranteil verändert, während bei allen weiteren Zufallszahlengeneratorendurchläufen im Betrieb der Chipkarte der in dem flüchtigen Speicher, also im RAM-Speicher, abgelegte Zähleranteil inkrementiert wird. Mit diesem Ansatz kann zwar die Effektivität der Zufallszahlenerzeugung verbessert werden. Die statistische Qualität dieses Ansatzes ist jedoch nicht zufriedenstellend, weil die Periode des Zufallszahlengenerators, d.h. die Anzahl der erzeugten Zufallszahlen, die erzeugt werden, bevor eine Folge von Zufallszahlen wiederholt erzeugt wird, deutlich verringert ist, da nur ein Teil des Zählers im EEPROM gespeichert wird.

Die vorliegende Erfindung hat sich deshalb zur Aufgabe gestellt einen Weg aufzuzeigen, mit dem eine bessere Qualität bei der Erzeugung von Pseudo-Zufallszahlen für einen mobilen Datenträger erreicht werden kann und der dessen Lebensdauer erhöhen kann, ohne daß bisherige Verfahren zum Erzeugen von Pseudo-Zufallszahlen modifiziert werden müssen. Insbesondere sollen die Zugriffe auf einen nichtflüchtigen Speicher des mobilen Datenträgers im Rahmen der Pseudo-Zufallszahlenerzeugung verringert werden.

Diese Aufgabe wird gelöst durch Merkmale der unabhängigen Ansprüche, insbesondere durch ein Verfahren zum Erzeugen von Pseudo-Zufallszahlen, durch ein Pseudo-Zufallszahlengenerator-Modul, durch einen mobilen Datenträger mit einem solchen Modul und durch ein Computerprogrammprodukt gemäß den beiliegenden Hauptansprüchen.

Die vorliegende Erfindung wird nachstehend anhand der verfahrensgemäßen Lösung beschrieben. Hierbei erwähnte Vorteile, Merkmale und alternative Ausführungsformen sind ebenso auf die anderen erfindungsgemäßen Lösungen der vorstehenden Aufgabe zu übertragen. Somit können sowohl das Pseudo-Zufallszahlengenerator-Modul, der mobile Datenträger und das Computerprogrammprodukt mit Unteransprüchen weitergebildet sein, die im Zusammenhang mit dem Verfahren erwähnt bzw. formuliert worden sind und umgekehrt.

Die Aufgabe wird insbesondere durch ein Verfahren zum Erzeugen von Pseudo-Zufallszahlen für einen mobilen Datenträger gelöst, bei dem zumindest zwei Pseudo-Zufallszahlengeneratoren verwendet werden, wobei ein Pseudo-Zufallszahlengenerator aus einem Input eine Folge von Zufallszahlen generiert, wobei der Input mit einem Startwert initialisiert wird und anschließend, also nach der Initialisierung des Pseudo-Zufallszahlengenerators und während des Betriebs des mobilen Datenträgers, auf einem Zustand des Pseudo-Zufallszahlengenerators basiert, wobei der Zustand in einem Speicher des mobilen Datenträgers gespeichert wird, wobei ein erster Pseudo-Zufallszahlengenerator verwendet wird, dessen erster Zustand jeweils in einem nicht flüchtigen Speicher des mobilen Datenträgers gespeichert wird, und wobei ein zweiter Pseudo-Zufallszahlengenerator verwendet wird, dessen zweiter Zustand jeweils in einen flüchtigen Speicher des mobilen Datenträgers gespeichert wird und wobei ein Startwert des zweiten Pseudo-Zufallszahlengenerators von zumindest einer Zufallszahl gebildet wird, die von dem ersten Pseudo-Zufallszahlen-generator generiert worden ist, falls eine Betriebsspannungsversorgung des mobilen Datenträgers unterbrochen worden ist, wobei die zu erzeugenden Pseudo-Zufallszahlen von dem zweiten Pseudo-Zufallszahlengenerator erzeugt werden.

Grundsätzlich betrifft die erfindungsgemäße Lösung Pseudo-Zufallszahlengeneratoren, bei denen ein beliebiges bekanntes Verfahren bzw. ein solcher Algorithmus eingesetzt werden kann, wie etwa ein Kongruenzgenerator (linear oder invers), ein sogenannter Fibonacci-Generator, etc. Wenn im folgenden von Zufallszahlen bzw. Zufallszahlengeneratoren gesprochen wird, dann sind vorzugsweise Pseudo-Zufallszahlen und Pseudo-Zufallszahlengeneratoren gemeint.

Erfindungsgemäß ist eine Hintereinanderschaltung bzw. eine Kaskade von Zufallszahlengeneratoren vorgesehen, bei denen ein Output des ersten Zufallszahlengenerators für den Input des zweiten Zufallszahlengenerators verwendet wird. Die Generatoren sind somit miteinander verschaltet bzw. verkoppelt. Der erste Zufallszahlengenerator speichert dabei seinen inneren Zustand jeweils im nichtflüchtigen Speicher, wie dies aus dem Stand der Technik bekannt ist. Der zweite Zufallszahlengenerator speichert hingegen seinen inneren Zustand nur im flüchtigen Speicher, z.B. im RAM. Während einer Session des mobilen Datenträgers, also im Betrieb des mobilen Datenträgers (gleichbedeutend mit dem Zeitraum zwischen zwei Resets des mobilen Datenträgers) wird erfindungsgemäß nur in den flüchtigen Speicher geschrieben. Dies liefert einen deutlichen Performance-Gewinn, da ein Zugriff auf den EEPROM grundsätzlich eine sehr zeitintensive Operation darstellt. Der erste Züfallszahlengenerator dient erfindungsgemäß also nicht zum Erzeugen von Zufallszahlen für das Betriebssystem, sondern lediglich dazu, den zweiten Zufallszahlengenerator zu initialisieren. Das Betriebssystem, das die Zufallszahlen anfordert, erhält die zu erzeugenden Zufallszahlen also nur von dem zweiten Generator. Nach einem Reset des mobilen Datenträgers wird der im nichtflüchtigen Speicher, insbesondere in EEPROM, gespeicherte erste Zustand des ersten Zufallsgenerators zur Erzeugung einer neuen Zufallszahl ausgelesen und mit dieser neu erzeugten Zufallszahl wird der zweite Zufallsgenerator neu initialisiert.

Erfindungsgemäß handelt es sich bei dem mobilen Datenträger um eine Chipkarte. Dabei ist das Einsatzgebiet des mobilen Datenträgers in keiner Weise beschränkt. Ebenso liegen jedoch auch andere Datenträger, die einen Prozessor oder einen Mikroprozessor aufweisen, im Rahmen dieser Erfindung, wie beispielsweise rechnergestützte Einheiten, Datenspeichervorrichtungen oder ähnliches.

Erfindungsgemäß soll unter dem Begriff "Startwert" ein Signal oder ein Wert verstanden sein, der bei Initialisierung des Pseudo-Zufallszahlengenerators verwendet wird. Dieser kann auch als Saat (seed) bezeichnet werden.

Bei dem nichtflüchtigen Speicher handelt es sich in der bevorzugten Ausführungsform um ein EEPROM des mobilen Datenträgers und bei dem flüchtigen Speicher um einen RAM-Baustein. Ebenso liegen jedoch auch andere, dem Fachmann bekannte äquivalente Speicherarten im Rahmen der Erfindung (z.B. ein ROM, PROM, EPROM, FLASH-EEPROM, FRAM für nicht flüchtige Speicherarten).

Bei dem Pseudo-Zufallszahlengenerator wird in der Regel ein rekursiver deterministischer Algorithmus verwendet. In alternativen Ausführungsformen ist es jedoch ebenso möglich nicht-rekursive arithmetische Pseudo-Zufallszahlengeneratoren und/oder eine Kombination mit anderen Zufallszahlengeneratoren (z.B. in Form von Schieberegistern mit Rückkopplung) zu verwenden. Üblicherweise greift der Pseudo-Zufallszahlengenerator auf einen Verschlüsselungsalgorithmus zu. Dabei kann beispielsweise der DES-Algorithmus (Data Encryption Standard: DES) als symmetrischer Verschlüsselungsalgorithmus verwendet werden. Ebenso liegen der für Chipkarten-Anwendungen typischerweise eingesetzte Triple-DES-Algorithmus oder Weiterentwicklungen, wie z.B. der AES-Algorithmus (Advanced Encryption-Standard) im Rahmen der Erfindung. Darüberhinaus ist es möglich hier asymmetrische Verschlüsselungsalgorithmen vorzusehen.

Unter dem Begriff "Unterbrechen einer Sitzung" soll im Rahmen dieser Erfindung ein Zurücksetzen der Chipkarte oder eine Unterbrechung durch Herausziehen der Chipkarte aus dem Terminal verstanden werden. Es umfaßt einen Kalt-Reset durch Ab- und wieder Anschalten der Versorgungsspannung und einen Warm-Reset, was durch ein Signal auf einer Reset-Leitung zur Chipkarte ausgeführt wird. Eine Sitzung bzw. Session der Chipkarte ist dann gegeben, wenn die Betriebsspannung für die Chipkarte zum erfolgreichen Datenaustausch mit einem Terminal bzw. mit einem Kartenleser existiert.

Vorzugsweise greift der Pseudo-Zufallgenerator bzw. das entsprechende Verfahren auf einen Verschlüsselungsalgorithmus zu. Dabei kann es sich sowohl um ein asymmetrisches als auch um ein symmetrisches Verschlüsselungsverfahren handeln. Vorzugsweise wird hier der DES-Algorithmus eingesetzt. Dafür wird bei Komplettierung der Chipkarte jeweils ein kartenindividueller Schlüssel für den DESAlgorithmus eingetragen, der eine Blocklänge von 8 Byte aufweist und dessen Output auf den Input rückgekoppelt ist.

In der bevorzugten Ausführungsform umfaßt der Zustand des jeweiligen Pseudo-Zufallszahlengenerators einen Zählerstand. Es ist jedoch alternativ ebenfalls möglich, weitere Parameter mit zu berücksichtigen, wie beispielsweise Schlüssel oder mehrere Schlüssel.

In einer bevorzugten Ausführungsform wird der erste Pseudo-Zufallszahlengenerator mit demselben Verfahren betrieben wie der zweite Pseudo-Zufallszahlengenerator. In einer etwas komplexeren und die Sicherheit erhöhenden Ausführungsform kann der erste Pseudo-Zufallszahlengenerator mit einem anderen Algorithmus betrieben werden, als der zweite Pseudo-Zufallszahlengenerator.

In der Regel ist es vorgesehen, daß der (innere) Zustand zumindest eines Pseudo-Zufallszahlengenerators nach jedem Durchlauf (bzw. nach jeder Ausführung des Algorithmus) aktualisiert und/oder gespeichert wird. In alternativen Ausführungsformen kann es jedoch vorgesehen sein, daß der Zustand nur nach einer konfigurierbaren Anzahl von Durchläufen aktualisiert und gespeichert wird. Damit kann die Effizienz des erfindungsgemäßen Verfahrens gesteigert werden. Es ist auch möglich, daß das Speichern des Zustandes des Pseudo-Zufallszahlengenerators nach konfigurierbaren Kriterien erfolgt, wobei die Kriterien für das Speichern des ersten Zustandes des ersten Generators von denjenigen zum Speichern des zweiten Zustandes des zweiten Generators abweichen können.

In einer bevorzugten Ausführungsform ist es vorgesehen, daß der erste Zufallszahlengenerator ausschließlich dazu verwendet wird den zweiten Pseudo-Zufallszahlengenerator zu initialisieren, falls eine vorhergehende Unterbrechung einer Sitzung des mobilen Datenträgers stattgefunden hat. Dementsprechend ist der zweite Pseudo-Zufallszahlengenerator ausschließlich dazu bestimmt, die vom Betriebssystem angeforderten zu erzeugenden Zufallszahlen zu generieren. Das Betriebssystem erhält also nur Zufallszahlen vom zweiten Zufallszahlengenerator.

Bei dem Input für den Zufallszahlengenerator handelt es sich um die Daten, die dem Generator zum Zwecke der Zufallszahlenerzeugung zugeführt werden. Zum ersten Mal wird der Input zum Zwecke der Initialisierung durch den Startwert gebildet. Nach dem Initialisierungsvorgang basiert der Input in der bevorzugten Ausführungsform auf dem Zustand, der seinerseits einen Zählerstand umfassen kann. Vorteilhafterweise kann dadurch sichergestellt werden, daß immer ein anderer Input für den Zufallszahlengenerator gebildet wird und somit unterschiedliche Zufallszahlen generiert werden können. Es ist jedoch auch möglich, andere Parameter als Eingangsgröße bzw. Input zu verwenden, die beispielsweise auf einen weiteren Zufallszahlengenerator oder auf anderen physikalischen Größen beruhen.

Der Zufallszahlengenerator erzeugt als Output Zufallszahlen. In einer bevorzugten Ausführungsform wird als weitere Output-Größe ein innerer Zustand des Pseudo-Zufallszahlengenerators ausgegeben, der jeweils nach jedem Durchlauf aktualisiert wird. Auch ist es möglich, daß der Zustand nur zumindest eine der jeweils aktuell erzeugten Zufallszahlen umfaßt oder anderweitig auf den erzeugten Zufallszahlen basiert und indirekt von ihnen abgeleitet ist. Alternativ ist es auch möglich, daß ein Zählerzustand direkt erfasst oder indirekt aus anderen Größen abgeleitet und gespeichert wird. Darüber hinaus können noch weitere Parameter Bestandteil des Outputs sein. Mittels der vorstehend erwähnten Konfigurationsmöglichkeiten in Hinblick auf Input und/oder Output kann das erfindungsgemäße Verfahren sehr flexibel an die jeweiligen Anwendungs-Situationen hin adaptiert werden, was die Einsatzmöglichkeiten des Verfahrens erhöht.

Mit der erfindungsgemäßen Kaskadierung von zwei Pseudo-Zufallszahlengeneratoren, die ihren jeweiligen Zustand einmal in den flüchtigen und einmal in den nichtflüchtigen Speicher schreiben, wird es möglich, qualitativ hochwertige und zuverlässige Pseudozufallszahlen zu erzeugen, ohne daß bei jeder Erzeugung eines Zufallzahlenblocks ein zeitintensiver Zugriff auf den nicht-flüchtigen Speicher notwendig wird. Weiterhin kann damit insgesamt die Lebensdauer der Chipkarte erhöht werden.

Ein weiterer Vorteil ist darin zu sehen, daß durch die Speicherung des Zustandes des ersten Zufallszahlengenerators im nichtflüchtigen Speicher sichergestellt werden kann, daß auch nach einem Zurücksetzen des flüchtigen Speichers nicht wieder dieselben Zufallszahlen erzeugt werden, wie bei dem vorhergehenden Durchlauf, sondern jeweils wieder neue bzw. aktualisierte Zufallszahlen.

Ein weiterer Vorteil der erfindungsgemäßen Lösung ist darin zu sehen, daß die bisherigen Algorithmen und Verfahren zur Erzeugung von Pseudozufallszahlen nicht modifiziert werden müssen, um die Anzahl der EEPROM-Schreibzugriffe pro Session zu reduzieren, bei konstanter Qualität des Generators.

In einer vorteilhaften Weiterbildung der Erfindung kann es vorgesehen sein, daß der erste Zufallszahlengenerator; der jeweils nur zur Initialisierung des zweiten Züfallszahlengenerators dient, nur die von ihm erzeugte Zufallszahl in das EEPROM speichert, das nach einem Reset oder einer sonstigen Unterbrechung der Karte als Input für den ersten Zufallsgenerator zur weiteren Erzeugung einer Zufallszahl dient. In diesem Fall umfaßt der Zustand des ersten Zufallszahlengenerators nur die von ihm erzeugten Zufallszahlen und enthält keinen weiteren Zähler. Im Gegensatz dazu ist es in der komplexeren Ausführungsform vorgesehen, daß der Output des ersten Zufallszahlengenerators neben den erzeugten Zufallszahlen auch einen Zähler umfaßt, der ebenfalls im EEPROM abgelegt wird und der dann als Eingangsgröße für weitere Durchläufe des ersten Zufallszahlengenerators dient.

Eine weitere Aufgabenlösung besteht in einem Pseudo-Zufallgenerator-Modul zum Erzeugen von Zufallszahlen zur Verwendung in einem mobilen Datenträger nach Anspruch 11, in einem mobilen Datenträger mit einem solchen Zufallszahlengenerator-Modul nach Anspruch 12 und in einem Computerprogramm-Produkt gemäß Anspruch 13.

Eine alternative Aufgabenlösung sieht ein Speichermedium vor, das zur Speicherung des vorstehend beschriebenen, computerimplementierten Verfahrens bestimmt ist und von einem Computer bzw. Mikrocomputer lesbar ist.

Darüber hinaus ist es möglich, einzelne Komponenten des vorstehend beschriebenen Verfahrens als Software-Module und/ oder Hardware-Module auszubilden.

Weitere vorteilhafte Ausführungsformen ergeben sich aus den Unteransprüchen.

In der folgenden detaillierten Figurenbeschreibung werden nicht einschränkend zu verstehende Ausführungsbeispiele mit weiteren Merkmalen und Vorteilen anhand der Zeichnungen besprochen. Diese zeigen:
- Fig.1: eine übersichtsartige Darstellung des Zusammenwirkens von zwei Pseudo-Zufallszahlengeneratoren gemäß einer bevorzugten Ausführungsform und
- Fig. 2: ein Ablaufdiagramm gemäß einer bevorzugten Ausführungsform der Erfindung,
- Fig. 3: eine Ablaufdiagramm einer vorteilhaften Ausgestaltung der Erfindung.

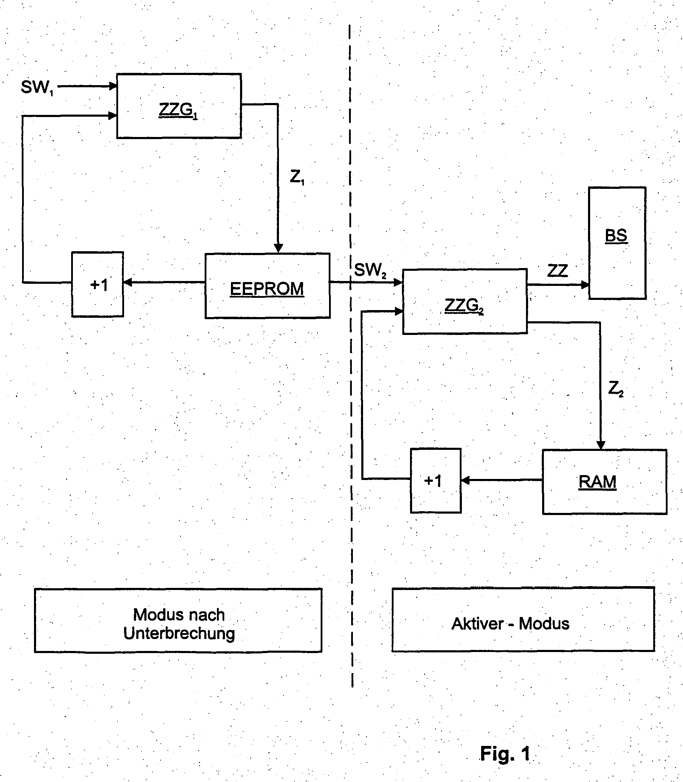

Im Folgenden wird die vorliegende Erfindung in Zusammenhang mit Fig.1 gemäß einer bevorzugten Ausführungsform beschrieben.

An dieser Stelle sei bemerkt, daß die Erfindung Pseudo-Zufallszahlengeneratoren betrifft. Wenn im folgenden von Zufallszahlen oder Zufallszahlengeneratoren die Rede ist, dann sind vorzugsweise Pseudo-Zufallszahlen und Pseudo-Zufallszahlengeneratoren gemeint.

Zur Erzeugung von Zufallszahlen ZZG ist ein Pseudo-Zufallszahlengenerator-Modul vorgesehen, das in einen mobilen Datenträger, insbesondere in eine Chipkarte, integriert ist. Das Pseudo-Zufallszahlengenerator-Modul umfaßt zwei hintereinander geschaltete Pseudo-Zufallszahlengeneratoren ZZG₁, ZZG₂.

Ein Pseudo-Zufallszahlengenerator ZZG erzeugt aus gegebenen Ausgangsbedingungen, dem Input, der üblichererweise in Gestalt eines Datensatzes einer bestimmten Länge vorliegt, eine Folge eine Folge von Zufallszahlen ZZ, die, gegebenenfalls in Verbindung mit weiteren Parametern, einen Output des Zufallszahlengenerators ZZG bilden. Je nach Art des verwendeten Zufallszahlengenerators ist es möglich, den Output des Zufallszahlengenerators ZZG unverändert oder verändert wieder als Input dem Zufallszahlengenerator ZZG für den nächsten Durchlauf einzuspeisen. Dies wird in der Regel für rekursive Zufallszahlengeneratore angewendet.

In einer bevorzugten Ausführungsform ist es vorgesehen; daß der Input eines Zufallszahlengenerators ZZG einen Startwert SW umfaßt, der zur Initialisierung des Inputs und zur ersten Inbetriebnahme bzw. zum ersten Durchlauf des Zufallszahlengenerators ZZG dient. Während des Betriebs, also nach der Initialisierung des jeweiligen Zufallszahlengenerators ZZG können andere Inputgrößen verwendet werden, insbesondere ist es erfindungsgemäß vorgesehen, daß ein in einem Speicher abgelegter Zustand Z als weiterer Input dient.

Der Output des erfindungsgemäßen Zufallszahlengenerators ZZG umfaßt in einer bevorzugten Ausführungsform neben den erzeugten Zufallszahlen ZZ einen Zustand bzw. inneren Zustand Z des Zufallszahlengenerators ZZG. Üblicherweise wird der Zustand Z nach jedem Durchlauf durch den Zufallszahlengenerator ZZG aktualisiert und in einem Speicher des mobilen Datenträgers abgelegt.

Um die Sicherheit zu erhöhen werden in der bevorzugten Ausführungsform jeweils nur abgeleitete Schlüssel ("derived keys") auf der Karte abgelegt, die jeweils ein kartenindividuelles Merkmal berücksichtigen.

Grundsätzlich ist das Erzeugen von Pseudo-Zufallszahlen bzw. Zufallszahlen für eine Vielzahl von Prozessen in Bezug auf den mobilen Datenträger relevant. Hierzu zählen sicherheitsrelevante Vorgänge, wie zum Beispiel die Durchführung einer Authentisierung. Um eine Manipulation der Daten zu vermeiden und um sicher zu stellen, daß die Daten von und zum mobilen Datenträger nur berechtigt übertragen werden, ist es wichtig, daß die hierbei verwendeten Zufallszahlen von hoher Qualität und nicht vorhersehbar sind. In der Regel wird hierbei ein so genanntes Challenge-Response-Verfahren angewendet, bei dem am Anfang jeder Sitzung ein Hintergrundsystem bzw. ein Terminal den Benutzer der Chipkarte eine Frage (Challenge) stellt und an Hand der von der Chipkarte zurück erhaltenen Antwort (Response) über die Authentizität entscheidet. Dabei kann die Frage zum Beispiel auf einer erzeugten Zufallszahl basieren, die als Eingabe für eine kryptographische Funktion dient. Der jeweils verwendete Schlüssel zwischen Terminal und Chipkarte ist geheim.

Erfindungsgemäß werden die Art des jeweils verwendeten Authentisierungsverfahrens und des Verschlüsselungsverfahrens sowie der Algorithmus zur Erzeugung von Zufallszahlen nicht festgelegt. Vielmehr können hier jeweils beliebige, geeignete, aus dem Stand der Technik bekannte Verfahren und Algorithmen eingesetzt werden. Insbesondere kann es sich bei der Authentisierung um eine einseitige oder gegenseitige oder um eine statische oder dynamische Authentisierung handeln. Darüber hinaus können symmetrische oder asymmetrische Verschlüsselungsvefahren eingesetzt werden. In der Regel wird als symmetrischer Kryptoalgorithmus der DESAlgorithmus (auch DEA-Algorithmus bezeichnet, Data Encryption Standard) verwendet. Da es sich hierbei um einen symmetrischen Algorithmus handelt, werden zur Verschlüsselung und zur Entschlüsselung dieselben Schlüssel verwendet. Die Blockgröße beträgt 64 Bits, wobei jeweils 1 Bit eines Bytes zu einem Paritäts-Check benötigt wird. Die tatsächliche Schlüssellänge beträgt bei dem DES-Algorithmus nur 56 Bits. Die Sicherheit des Gesamtsystems kann jedoch erhöht werden, wenn anstatt des DES-Algorithmus ein Triple-DES-Algorithmus verwendet wird, bei dem der Schlüsselraum signifikant vergrößert ist. Soll ein asyminetrisches Kryptoverfahren zu Grunde gelegt werden, so wird in der Regel auf den RSA-Algorithmus zurückgegriffen. Alternative Ausführungsformen sehen hier dem Fachmann bekannte andere Verfahren und Algorithmen vor.

Die Erfindung gestattet es zu konfigurieren, welches Verfahren bei der aktuellen Anwendung zum Einsatz kommen soll. Für die erstmalige Inbetriebnahme einer Chipkarte muß festgelegt sein, welcher Input zur Initialisierung des Zufallszahlengenerators ZZG verwendet wird. Bei Komplettierung der Chipkarte wird in der Regel ein Startwert SW, gegebenenfalls in Kombination mit kartenindividuellen Schlüsseln, vorgesehen. Der Startwert SW wird auch als Seed bezeichnet. Der erste Startwert SW₁ des ersten Zufallszahlengenerators ZZG₁ kann dabei von einem weiteren Modul des mobilen Datenträgers stammen oder er kann aus dem nichtflüchtigen Speicher ausgelesen werden. Davon abweichend wird der zweite Startwert SW₂ des zweiten Zufallszahlengenerators ZZG₂ gebildet. Der Startwert SW₂ ist grundsätzlich ein Wert, der von dem ersten Zufallszahlengenerators ZZG₁ erzeugt und im nicht-flüchtigen Speicher abgelegt worden ist. Der zweite Startwert SW₂ ist vorzugsweise identisch mit einer vom ersten Zufallsgenerator ZZG₁ erzeugten Zufallszahl ZZ.

In Fig.1 ist ein übersichtsartiges Blockschaltdiagramm der erfindungsgemäßen Zufallszahlengeneratoren ZZG abgebildet. Der erste Zufallszahlengeneratoren ZZG₁ legt seinen Output, insbesondere seinen Zustand Z₁ und die von ihm erzeugten Zufallszahlen ZZ, in einem nichtflüchtigen Speicher, insbesondere im EEPROM, ab. Die von ihm erzeugten Zufallszahlen ZZ werden ausschließlich zur Initialisierung des zweiten Zufallszahlengenerators ZZG₂ verwendet. Eine Initialisierung ist insbesondere dann notwendig, wenn die Versorgungsspannung für den mobilen Datenträger unterbrochen worden ist; in diesem Fall wurde der flüchtige Speicher, insbesondere der RAM-Baustein, gelöscht. In dem Speicher abgelegte Inhalte sind damit verloren und stehen nicht mehr zur Verfügung.

Das bei der Erfindung vorgesehene Vorgehen ist grundsätzlich unabhängig von der Art der jeweiligen Unterbrechung. Diese kann durch einen Reset oder durch ein Herausziehen der Karte aus einem Lese- und/oder Schreibgerät, durch einen Ausfall des Hintergrundsystems und/ oder durch einen sonstigen Defekt oder Fehler im System ausgelöst werden.

Befindet sich das System in einem aktiven Modus, der definiert wird als Zeitraum zwischen zwei Unterbrechungen der Betriebsspannung des mobilen Datenträgers, so ist lediglich der zweite Zufallsgenerator ZZG₂ aktiv. Werden vom Betriebssystem BS Zufallszahlen ZZ angefordert, so werden diese ausschließlich vom zweiten Zufallszahlengenerator ZZG₂ bereitgestellt. Dieses Verfahren im aktiven Modus ist in Fig.1 auf der rechten Seite der vertikalen, gestrichelten Linie dargestellt. Nach Initialisierung des zweiten Zufallszahlengenerators ZZG₂ durch den vom ersten Zufallszahlengenerator ZZG₁ erzeugten Startwert SW₂ werden weitere Zufallszahlenfolgen erstellt, die an das Betriebssystem BS weitergeleitet werden können. Nach einem Durchlauf des zweiten Zufallszahlengenerators ZZG₂ wird jeweils ein Zustand Z₂ des zweiten Generators im flüchtigen Speicher RAM abgelegt, aktualisiert und dient ferner - gegebenenfalls in aktualisierter Form - als weiterer Input für den nächsten Durchlauf des zweiten Zufallszahlengenerators ZZG₂. Dieses Vorgehen wird iterativ so lange wiederholt, bis eine Unterbrechung der Versorgungsspannung, insbesondere ein Reset eintritt. Dann wird das in Fig. 1 auf der linken Seite der vertikalen, gestrichelten Linie dargestellte Vorgehen ausgelöst. Der jeweils im EEPROM gespeicherte Zustand Z₁ des ersten Zufallszahlengenerators ZZG₁ wird ausgelesen, aktualisiert und dem Zufallszahlengenerator ZZG₁ als weiterer Input zugeführt, um die nächste Folge von Zufallszahlen ZZ zu erzeugen, im EEPROM abzulegen und an den zweiten Zufallszahlengenerator ZZG₂ weiterzuleiten.

In einer bevorzugten Ausführungsform umfaßt der erste Zustand Z₁ des ersten Zufallszahlengenerators ZZG₁ die von ihm erzeugten Zufallszahlen ZZ und einen Zähler, der nach jedem Durchlauf aktualisiert bzw. inkrementiert wird. Alternative Ausführungsformen sehen es jedoch vor, daß nur die Zufallszahlen ZZ oder nur ein Zähler abgelegt werden.

Zweckmäßig ist es vorgesehen, daß der vom ersten Zufallszahlengenerator ZZG₁ an den zweiten Generator ZZG₂ übergebene Startwert SW₂ aus einem Zählerstand und einem daraus abgeleiteten Schlüssel besteht. Der abgeleitete Schlüssel entspricht einem vom ersten Generator ZZG₁ verwendeten karten-individuellen Schlüssel, wird aber - anders als dieser - bei jeder Inbetriebnahme neu berechnet.

Um sicherzustellen, daß ein Zufallszahlengenerator ZZG₁, ZZG₂ jeweils andere bzw. unterschiedliche Inputgrößen verarbeitet, wird der jeweils aktuelle Zähler, der vom Zustand Z umfaßt ist, inkrementiert. Dies sei in Fig. 1 durch die Bezeichnung "+1" gekennzeichnet.

Die erfindungsgemäße sequenzielle Verschaltung der Zufallszahlengeneratoren ZZG₁, ZZG₂ und der damit verbundene Datenaustausch ist in dem Pseudo-Zufallszahlen-Generatormodul zusammengefaßt. Das Pseudo-Zufallszahlen-Generatormodul ist in den mobilen Datenträger, insbesondere in die Prozessor-ChipKarte, integriert.

Wie vorstehend erwähnt, umfaßt der Input in der bevorzugten Ausführungsform den Startwert SW und den Zustand Z, während der Output die Zufallszahlen ZZ und den jeweils aktualisierten Zustand Z umfaßt, der insbesondere durch einen Zähler ausgebildet sein kann. In alternativen, komplexeren Ausführungsformen kann der Input und/ oder der Output noch weitere Parameter (zum Beispiel Schlüssel) umfassen. Der Input von beiden Zufallszahlengeneratoren ZZG₁, ZZG₂ ist nicht von physikalischen Größen abhängig, sondern wird berechnet und liegt somit als digitales Signal vor, das in den Zufallszahlengenerator ZZG eingespeist werden kann.

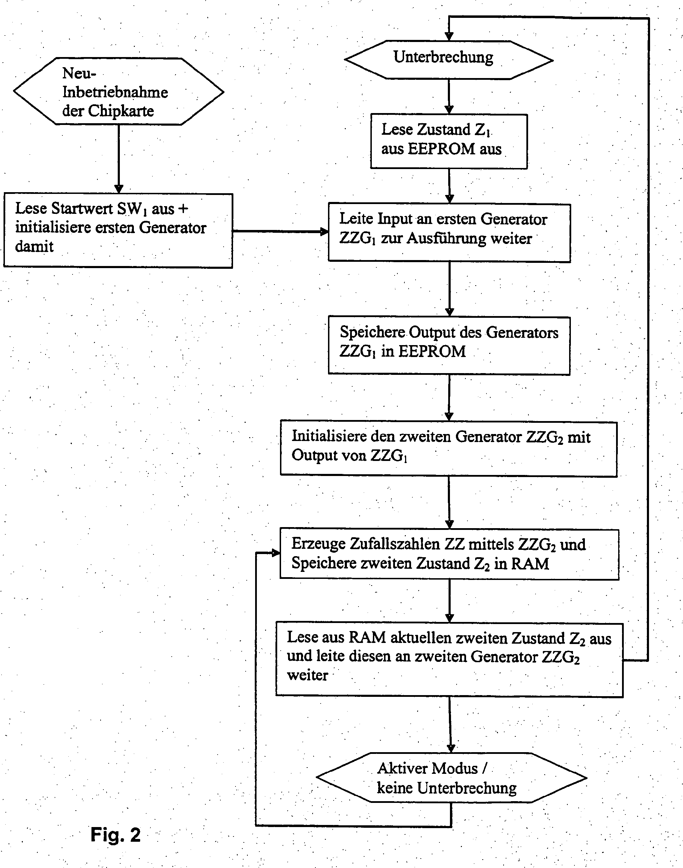

Das erfindungsgemäße Verfahren wird nachstehend in Zusammenhang mit Fig. 2 in einer bevorzugten Ausführungsform erläutert. Dabei wird unterschieden, ob es sich um eine Erst-Inbetriebnahme oder um eine Wiederinbetriebnahme der Chipkarte handelt. Im ersten Fall, also beim erstmaligen Einsetzen der Chipkarte, wird ein Startwert SW₁ aus einem Speicher, insbesondere aus dem EEPROM ausgelesen und zur Initialisierung des ersten Zufallszahlengenerators ZZG₁ verwendet.

Falls es sich um eine Wiederinbetriebnahme der Chipkarte handelt, also nach einer Unterbrechung der Spannungsversorgung derselben, wird der jeweils aktuelle Zustand Z₁ aus dem EEPROM ausgelesen und als Input an den ersten Zufallszahlengenerator ZZG₁ zur Ausführung weitergeleitet. Nach dem Durchlauf des ersten Zufallszahlengenerators ZZG₁ wird der Output des ersten Zufallszahlengenerators im EEPROM abgelegt. Dabei dient die vom ersten Zufallszahlengenerator ZZG₁ erzeugte Zufallszahl ZZ zur Initialisierung des zweiten Zufallszahlengenerators ZZG₂. Falls nun im Betrieb der Chipkarte, also während einer Session, weitere Zufallszahlen vom Betriebssystem BS angefordert werden, so erzeugt der zweite Zufallszahlengenerator ZZG₂ weitere Zufallszahlen ZZ, indem der jeweils aktuelle Zustand Z₂ des zweiten Zufallszahlengenerators ZZG₂ aus dem flüchtigen Speicher, dem RAM-Baustein, ausgelesen und ggf. in aktualisierter Form als Input dem zweiten Zufalls-zahlengenerator ZZG₂ zugeleitet wird. Nach jeder Durchführung der Zufallszahlenerzeugung wird der jeweilige Zustand Z aktualisiert bzw. inkrementiert. Dafür umfaßt der Zustand Z in der bevorzugten Ausführungsform einen zu inkrementierenden Zähler. Während einer Session erfolgen ausschließlich Zugriffe auf den RAM-Speicher, was zu einer deutlichen Performance-Steigerung führt. Erst wenn eine Unterbrechung der Betriebsspannung der Chipkarte erfolgt ist und der RAM-Speicher gelöscht ist, wird der jeweils aktuelle Zustand Z₁ aus dem EEPROM ausgelesen und wird wieder als Input für den ersten Zufallszahlengenerator ZZG₁ eingespeist. Daraufhin wiederholt sich das eben beschriebene Verfahren.

Ein wesentlicher Vorteil der erfindungsgemäßen Lösung ist darin zu sehen, daß die Qualität der Zufallszahlenerzeugung, mithin die "Zufälligkeit" der Zufallszahlen ZZ erhöht werden, und gleichzeitig die Performance und die Lebensdauer der Chipkarte ebenfalls verbessert werden können.

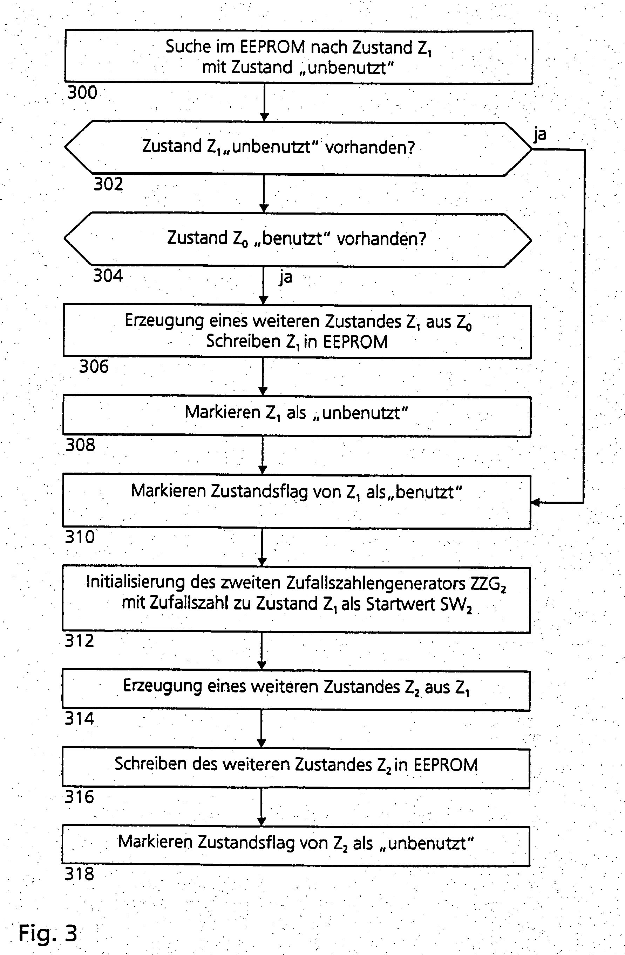

In einer vorteilhaften, in Fig. 3 veranschaulichten Ausgestaltung der erfindungsgemäßen Lösung werden im nichtflüchtigen Speicher jeweils zumindest zwei aufeinanderfolgende Zustände Zᵢ, Zᵢ₊₁ des Zufallszahlengenerators ZZG₁ sowie jeweils ein Zustandsflag ZFi zu jedem der Zustände Zᵢ, das die Zustände "benutzt" und "unbenutzt" haben kann, vorgehalten. Zweckmäßigerweise wird zusammen mit dem Zustand Zᵢ ferner die bei Erreichen des Zustandes Zᵢ berechnete Zufallszahl ZZᵢ im nichtflüchtigen Speicher abgespeichert. Im Grundszustand steht das Zustandsflag ZZᵢ auf "unbenutzt".

Bei Inbetriebnahme der Chipkarte sucht der erste Zufallszahlengenerator ZZG₁ im nichtflüchtigen Speicher zunächst nach einem Zustand Z₁ mit einem Zustandsflag "unbenutzt", Schritt 300. Ergibt die Suche, daß im nichtflüchtigen Speicher kein "unbenutzter" Zustand Z₁ vorhanden ist, Schritt 302, sondern nur ein "benutzter" Zustand Z₀, Schritt 304, wird aus dem Zustand Z₀ zuerst durch Weiterschalten des Zufallsgenerators ZZG₁ ein neuer, unbenutzter Folgezustand Z₁ berechnet, im nicht-flüchtigen Speicher abgelegt, Schritt 306, und als "unbenutzt" markiert, Schritt 308. Ist danach im nichtflüchtigen Speicher ein unbenutzter Zustand Z₁ des Zufallsgenerators ZZG₁ vorhanden, wird der im flüchtigen Speicher gehaltene Zufallsgenerator ZZG₂ initialisiert. Hierzu wird zunächst das Zustandsflag ZF₁ auf "benutzt" gesetzt, Schritt 310. Die im Zustand Z₁ von ZZG₁ berechnete Zufallszahl ZZ₁ dient sodann als Startwert SW₂ zur Initialisierung des zweiten Zufallszahlengenerators ZZG₂, Schritt 312.

Anschließend, Schritt 314, wird ausgehend von dem Zustand Z₁ des Zufallsgenerators ZZG₁ der durch Weiterschalten von ZZG₁ erreichte Folgezustand Z₂ berechnet, im nichtflüchtigen Speicher abgespeichert, Schritt 316, und als "unbenutzt" markiert, Schritt 318. Bei der nächsten Wiederinbetriebnahme der Chipkarte nach einer Unterbrechung der Spannungsversorgung steht auf diese Weise unmittelbar wieder ein "unbenutzter" Zustand Z₂ zu Verfügung. Falls die Spannungsversorgung vor dem Abspeichern von Z₂ unterbrochen wird, steht bei der nächsten Inbetriebnahme zumindest der "benutzte" Zustand Z₁ zur Verfügung.

In einer Ausführungsform kann vorgesehen sein, daß alle Schreibvörgänge in den nichtflüchtigen Speicher in einem Hintergrundprozeß erfolgen, um parallel zu diesen Schreibvorgängen andere Aufgaben, wie z.B. die das Weiterschalten von ZZG₁ oder die Initialisierung von ZZG₂ oder die Ein- und Ausgabe von Daten zu erledigen. Die Absicherung der in solchen Hintergrundprozessen ablaufenden Operationen gegen Spannungsausfall stellt für einen erfahren Programmierer keine Schwierigkeit dar. Ebenso kann das Weiterschalten von ZZG₁ parallel zu anderen Aktivitäten erfolgen.

Die Codierung des Zustandsflags erfolgt zweckmäßig in einem Byte so, daß der Übergang von dem Zustand "unbenutzt'' in den.Zustand "benutzt" nur einen Schreibvorgang, jedoch keinen Löschvorgang im nichtflüchtigen Speicher erfordert. Sofern der nichtflüchtige Speicher ein bitweises Ändern der Daten in eine Richtung erlaubt, kann zur besonderen Sicherung der Daten gegen Manipulation das Flag auch in mehreren Bytes codiert sein, die jeweils weder einer Folge von binären Nullen noch einer Folge von binären Einsen entsprechen. Ein Schreibvorgang kann dann wiederum ohne vorheriges Löschen von Bits erfolgen. Jeder Zustand der, der nicht entweder "unbenutzt" oder benutzt entspricht wird als ungültig gewertet.

## Patentansprüche

1. Verfahren zum Erzeugen von Pseudo-Zufallszahlen (ZZ) für einen mobilen Datenträger unter Verwendung zumindest eines Pseudo-Zufallszahlengenerators (ZZG), der aus einem Input eine Folge von Pseudozufallszahlen (ZZ) generiert, wobei der Input mittels eines Startwertes (SW) initialisiert wird und nach der Initialisierung auf einem Zustand (Z) des Pseudo-Zufallszahlengenerators (ZZG) basiert, wobei der Zustand (Z) in einem Speicher des mobilen Datenträgers gespeichert wird,
**dadurch gekennzeichnet, daß**
ein erster Pseudo-Zufallszahlengenerator (ZZG₁) verwendet wird, dessen erster Zustand (Z₁) in einen nicht-flüchtigen Speicher des mobilen Datenträgers gespeichert wird und, daß
ein zweiter Pseudo-Zufallszahlengenerator (ZZG₂) verwendet wird, dessen zweiter Zustand (Z₂) in einen flüchtigen Speicher des mobilen Datenträgers gespeichert wird und dessen Startwert (SW₂) zumindest von einer Pseudo-Zufallszahl (ZZ) initialisiert wird, die von dem ersten Pseudo-Zufallszahlengenerator (ZZG₁) jeweils generiert wird, wenn die Spannungsversorgung des mobilen Datenträgers unterbrochen worden ist, wobei die Pseudo-Zufallszahlen (ZZ) von dem zweiten Pseudo-Zufallszahlengenerator (ZZG₂) erzeugt werden.

2. Verfahren nach Anspruch 1, **dadurch gekennzeichnet, daß** der Zustand (Z) einen Zähler und gegebenenfalls noch weitere Parameter umfaßt.

3. Verfahren nach zumindest Anspruch 1 oder 2, **dadurch gekennzeichnet, daß** der erste Pseudo-Zufallszahlengenerator (ZZG₁) mit denselben oder mit unterschiedlichen Verfahren betrieben werden kann, wie der zweite Pseudo-Zufallszahlengenerator (ZZG₂).

4. Verfahren nach zumindest einem der vorhergehenden Ansprüche, **dadurch gekennzeichnet, daß** der Zustand (Z) nach zumindest einem, insbesondere nach jedem, Durchlauf des Pseudo-Zufallszahlengenerators (ZZG₁, ZZG₂) aktualisiert und gespeichert wird.

5. Verfahren nach zumindest einem der vorhergehenden Ansprüche, **dadurch gekennzeichnet, daß** in einem aktiven Modus des mobilen Datenträgers vom Betriebssystem (BS) angeforderte Pseudo-Zufallszahlen (ZZ) ausschließlich vom zweiten Pseudo-Zufallszahlengenerator (ZZG₂) erzeugt werden.

6. Verfahren nach zumindest einem der vorhergehenden Ansprüche, **dadurch gekennzeichnet, daß** die vom ersten Pseudo-Zufallszahlengenerator (ZZG₁) erzeugten Pseudo-Zufallszahlen (ZZ) ausschließlich zur Initialisierung des zweiten Pseudo-Zufallszahlengenerators (ZZG₂) im Falle einer Unterbrechung dienen.

7. Verfahren nach zumindest einem der vorhergehenden Ansprüche, **dadurch gekennzeichnet, daß** der Input des Pseudo-Zufallszahlengenerators (ZZG) zum ersten Mal mit dem Startwert (SW) initialisiert wird und anschließend auf dem Zustand (Z) basiert und/oder andere Parameter umfassen kann.

8. Verfahren nach zumindest einem der vorhergehenden Ansprüche, **dadurch gekennzeichnet, daß** ein vom Pseudo-Zufallszahlengenerator (ZZG) erzeugter Output Zufallszahlen (ZZ), den Zustand (Z) des Pseudo-Zufallszahlengenerators (ZZG), insbesondere einen nach jedem Durchlauf zu inkrementierenden Zähler und/oder weitere Parameter umfaßt.

9. Verfahren nach zumindest einem der vorhergehenden Ansprüche, **dadurch gekennzeichnet, daß** im aktiven Modus des mobilen Datenträgers, also vor einer Unterbrechung, kein oder maximal ein Zugriff zum Zwecke der Initialisierung auf den nichtflüchtigen Speicher des mobilen Datenspeichers erfolgt.

10. Verfahren nach zumindest einem der vorhergehenden Ansprüche, **dadurch gekennzeichnet, daß** der Output des Pseudo-Zufallszahlengenerators (ZZG) rückgekoppelt ist und zumindest teilweise als Input des Pseudo-Zufallszahlengenerators (ZZG) für den jeweils nächsten Durchlauf desselben dient.

11. Verfahren nach zumindest einem der vorhergehenden Ansprüche, **dadurch gekennzeichnet, daß** die für den ersten Pseudo-Zufallszahlengenerator (ZZG₁) erzeugten Zustände (Zᵢ) jeweils mit einem Zustandsflag versehen werden, das die Zustände "unbenutzt" und "benutzt" aufweisen kann und im nichtflüchtigen Speicher des mobilen Datenträgers zumindest ein Zustand mit einem Zustandsflag im Zustand "unbenutzt" vorgehalten wird.

12. Verfahren nach zumindest einem der vorhergehenden Ansprüche, **dadurch gekennzeichnet, daß** vor Initialisierung des zweiten Pseudo-Zufallszahlengenerators (ZZG₂) ein neuer, als "unbenutzt" vorgehaltener Zustand (Z₁) erzeugt wird (306), wenn ein als "unbenutzter" Zustand nicht gefunden wurde.

13. Verfahren nach zumindest einem der vorhergehenden Ansprüche, **dadurch gekennzeichnet, daß** eine vom ersten Pseudo-Zufallszahlengenerator (ZZG₁) erzeugte Zufallszahl zunächst als Startwert (SW₂) in den flüchtigen Speicher des mobilen Datenträgers geschrieben und nach erfolgter Initialisierung des zweiten Pseudo-Zufallszahlengenerators (ZZG₂) als neue vorgehaltene Zufallszahl in den nichtflüchtigen Speicher zurückgeschrieben wird

14. Pseudo-Zufallszahlengenerator-Modul zum Erzeugen von Zufallszahlen zur Verwendung in einem mobilen Datenträger, mit zumindest einem Pseudo-Zufallszahlengenerator (ZZG₁, ZZG₂), der dazu bestimmt ist, aus einem Input eine Folge von Pseudo-Zufallszahlen (ZZ) zu generieren, wobei der Input mittels eines Startwertes (SW₁, SW₂) initialisiert wird und im Betrieb auf einem Zustand (Z) des Pseudo-Zufallszahlengenerators(ZZG₁,ZZG₂) basiert, wobei der Zustand (Z) in einem Speicher des mobilen Datenträgers gespeichert wird; umfassend:
- einen ersten Pseudo-Zufallszahlengenerator (ZZG₁), dessen erster Zustand (Z₁) in einen nicht-flüchtigen Speicher des mobilen Datenträgers gespeichert wird, und
- einen zweiten Pseudo-Zufallszahlengenerator (ZZG₂), dessen zweiter Zustand (Z₂) in einen flüchtigen Speicher des mobilen Datenträgers gespeichert wird und dessen Startwert (SW₂) von zumindest einer Pseudo-Zufallszahl (ZZ) gebildet wird, die von dem ersten Pseudo-Zufallszahlengenerator (ZZG₁) generiert ist, falls die Spannungsversorgung für den mobilen Datenträger unterbrochen worden ist, wobei die von dem Pseudo-Zufallszahlengenerator-Modul erzeugten Pseudo-Zufallszahlen (ZZ) vom zweiten Pseudo-Zufallszahlengenerator (ZZG₂) erzeugt werden.

15. Mobiler Datenträger mit einem Pseudo-Zufallszahlengenerator-Modul nach Anspruch 11 zur Erzeugung von Pseudo-Zufallszahlen (ZZ).

16. Computerprogrammprodukt, das direkt in einen Speicher eines Computers und/ oder Mikrocomputers geladen werden kann und Softwarecodeabschnitte umfaßt, mit denen die Verfahrensschritte gemäß zumindest einem der vorstehenden Verfahrensansprüche 1 bis 10 ausgeführt werden, wenn das Produkt auf einem Prozessor des Computers bzw. Mikrocomputers ausgeführt wird.
